Europäisches Patentamt

European Patent Office

Office européen des brevets

(19)

(11) **EP 1 145 037 B1**

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(21) Anmeldenummer: **00907432.9**

(22) Anmeldetag: **14.01.2000**

(51) Int Cl.⁷: **G01S 13/02**, G06K 7/10

(86) Internationale Anmeldenummer:
**PCT/DE00/00128**

(87) Internationale Veröffentlichungsnummer:
**WO 00/043802 (27.07.2000 Gazette 2000/30)**

(54) **ANORDNUNG ZUM ERZEUGEN EINES EINE INFORMATION TRAGENDEN ANTWORTSIGNALS UND VERFAHREN ZUR FERNABFRAGE EINER SOLCHEN ANORDNUNG**

CONFIGURATION FOR PRODUCING A RESPONSE SIGNAL CARRYING A PIECE OF INFORMATION AND METHOD FOR THE REMOTE INQUIRY OF SUCH A CONFIGURATION

DISPOSITIF PERMETTANT DE PRODUIRE UN SIGNAL REPONSE CONTENANT DES INFORMATIONS, ET PROCEDE D'INTERROGATION A DISTANCE D'UN TEL DISPOSITIF

(84) Benannte Vertragsstaaten:
**AT BE CH CY DE DK ES FI FR GB GR IE IT LI LU MC NL PT SE**

(30) Priorität: **21.01.1999 DE 19902261**

(43) Veröffentlichungstag der Anmeldung:
**17.10.2001 Patentblatt 2001/42**

(73) Patentinhaber: **EnOcean GmbH**
**82041 Oberhaching (DE)**

(72) Erfinder:
• **VOSSIEK, Martin**
**D-80789 München (DE)**
• **SCHMIDT, Frank**
**D-85604 Pöring (DE)**

• **ALBSMEIER, Andre**
**D-81479 München (DE)**
• **KNAUER, Ulrich**
**D-81739 München (DE)**
• **SCZESNY, Oliver**
**D-85609 Aschheim (DE)**

(74) Vertreter: **Epping, Wilhelm, Dipl.-Ing.**
**Epping Hermann & Fischer**
**Postfach 12 10 26**
**80034 München (DE)**

(56) Entgegenhaltungen:
**WO-A-97/12258** **WO-A-98/36395**
**GB-A- 2 165 423** **US-A- 5 457 447**

**Beschreibung**

Die Erfindung betrifft eine Anordnung zum Erzeugen eines eine Information tragenden Antwortsignals auf eine empfangene elektromagnetische Strahlung, sowie ein Verfahren zur Fernabfrage einer solchen Anordnung.

Eine solche Anordnung und ein solches Verfahren sind aus jeder der Dokumente [1, 2, 3, 4, 5] bekannt. Die Anordnung wird gegebenenfalls als "Transpondersystem" bezeichnet.

Anordnungen und Verfahren dieser Art haben ein sehr großes Anwendungspotential, insbesondere als berührungslos arbeitende Identifizierungs- oder Sensorsysteme.

Im Dokument [5] relevant ist der Aufsatz "Funksensorik mit passiven Oberflächenwellen-Komponenten (OFW)" von L. Reindl und V. Mägori, S. 62 bis 79; aus diesem Aufsatz ist grundlegende Information zur Gestaltung eines Transpondersystems mit einem Oberflächenwellen-Element entnehmbar. Zusätzlich wird hingewiesen auf den Aufsatz "Sensorreifen mit berührungsloser Daten- und Energieübertragung" von J. Stöcker, P. Hahne und B. Breuer, S. 10 bis 23, sowie den Aufsatz "Ferngespeiste injizierbare Transponder zur Erfassung von physiologischen Daten" von I. Wolff und N.H.L. Koster, S. 80-91. Jeder der beiden letztgenannten Aufsätze beschreibt ein Transpondersystem, welches allerdings nicht mit einem Oberflächenwellen-Element arbeitet, und ist von Interesse im Hinblick auf den hier maßgeblichen technologischen Hintergrund.

Für manche Anwendung ist ein solches System interessant, bei dem ein Kodierungselement, welches die Identifizierungs- oder Sensorfunktion hat, ohne eigene Energieversorgung wie eine Batterie arbeitet, und bei dem das Antwortsignal aus der Energie eines Abfragesignals generiert wird. Bei einem bekannten Transpondersystem wird aus der gesendeten elektromagnetischen Energie eine Spannung generiert, mit der eine aktive elektronische Schaltungsanordnung betrieben wird, welche das Kodierungselement enthält, mit diesem die gewünschte Information generiert und an das Abfragegerät sendet. Da die minimale Spannung, ab der eine solche elektronische Schaltung (z.B. CMOS) arbeiten kann, relativ hoch ist, ist die Reichweite dieses Transpondersystems relativ gering.

Ein Transpondersystem mit einem OFW-Element als Kodierungselement kann rein passiv arbeiten. Auf dem OFW-Element wird das hochfrequente elektrische Abfragesignal in eine akustische Oberflächenwelle umgewandelt. Diese wird durch auf die Oberfläche aufgebrachte Strukturen und gegebenenfalls auch die Umgebungsbedingungen modifiziert und anschließend wieder in ein elektrisches Signal zurückgewandelt. Diesem elektrischen Signal ist die Modifikation der Oberflächenwelle aufgeprägt, so daß bei bekannter geometrischer Anordnung der Strukturen auf die Größe der Modifikation geschlossen werden kann. Eine Funkauslesbarkeit des OFW-Elementes wird erreicht, indem das OFW-Element mit einer Antenne verbunden wird. Das Element wird nun mit einem Abfragegerät nach dem Radarprinzip aus einiger Entfernung abgefragt oder "gelesen".

Nachteilig bei den bekannten Transpondersystemen und Verfahren ist, daß jeweils die Übertragung der Energie vom Abfragegerät zum Kodierungselement nur mit einem schlechten Wirkungsgrad möglich ist, so daß die räumliche Reichweite eingeschränkt ist und/ oder mit hoher Sendeleistung gearbeitet werden muß. Letzteres führt zu einer hohen Belastung der Umwelt auf Grund des relativ hohen Energieverbrauchs und der Probleme mit der Elektromagnetischen Verträglichkeit Eine richtscharfe Antenne kann zwar die Leistungsübertragung optimieren, schränkt jedoch das mögliche Einsatzgebiet bzw. den Arbeitsbereich (Abfrageort) der Anordnung relativ zum Abfragegerät stark ein.

Ein weiterer Nachteil besteht darin, daß in dem Fall, in dem sich mehrere Anordnungen im Arbeitsbereich eines Abfragegeräts befinden, alle Anordnungen gleichzeitig auf ein Abfragesignal antworten. Eine Pulkfähigkeit ist daher nur eingeschränkt zu realisieren. Von Pulkfähigkeit spricht man, wenn mehrere Anordnungen sich im Arbeitsbereich eines Abfragegerätes befinden können, wobei sich die Antwortsignale gegenseitig nicht wesentlich stören, so daß eine eindeutige Identifizierung und Abfrage jeder einzelnen Anordnung möglich ist.

Eine weitere Einschränkung ergibt sich dadurch, daß das Abfragesignal direkt auf dem OFW-Element modifiziert wird und daher die Eigenschaften des Abfragesignals (Mittenfrequenz und Bandbreite) auf das OFW-Element zugeschnitten sein müssen. Das Abfragesignal kann daher im allgemeinen nicht im Sinne einer möglichst maximalen Energieübertragung ausgelegt werden.

Eine bekannte Ausführung eines funkauslesbaren Transpondersystems mit einem OFW-Sensor als Kodierungselement ergibt sich, wenn die Anregung des Kodierungselements nicht mittels eines gesendeten Abfragesignals, sondern mit einem Hochfrequenzsignal, welches aus Prozeßenergie generiert wird, erfolgt. In diesem Fall kann die Sendeeinheit im Abfragegerät entfallen. Eine Anordnung zur Erzeugung eines kodierten Hochfrequenzsignals aus Prozeßenergie ist in [6] dargestellt. Hierbei wird mit einem Wandler thermische, mechanische oder elektromagnetische Prozeßenergie in elektrische Energie umwandelt. Indem das Sendeereignis in Abhängigkeit vom energetischen Zustand am Ort des Kodierungselements und damit eher zufällig erfolgt, zudem die Sendepulse sehr kurz sind, ist eine sehr weitreichende Pulkfähigkeit gegeben. Nachteilig ist, daß die Anordnung nicht gezielt abgefragt werden kann, sondern eigenständig arbeitet. Eine gezielte Diagnose, z.B. ob die Anordnung noch funktioniert, und der Einsatz in einem sicherheitsrelevanten Gebiet werden hierdurch stark eingeschränkt.

Aufgabe der vorliegenden Erfindung ist es daher, eine Anordnung und ein Verfahren anzugeben, mit der oder mit dem die berührungslose gezielte Abfrage von Information ohne Energiequelle in der Anordnung besser vorgenommen werden kann als bisher. Insbesondere soll die Erfindung eine pulkfähige Anordnung angeben.

Diese Aufgabe wird erfindungsgemäß gelöst durch eine Anordnung nach Patentanspruch 1 oder ein Verfahren nach Patentanspruch 12. Ausgestaltungen der Erfindung sind weiteren Patentansprüchen zu entnehmen.

Die Grundidee besteht darin, eine Strahlung am Ort eines Kodierungselementes mit Hilfe eines Wandlers in eine Sekundärenergieform umzuwandeln, die zwischengespeichert wird. Diese gespeicherte Sekundärenergie wird dann einem nichtlinearen Element zugeführt, welches aus dieser ein Hochfrequenzsignal erzeugt, welches wiederum dem Kodierungselement zugeleitet wird, wo ihm eine Information aufgeprägt und so ein Antwortsignal erzeugt wird. Diese Information kann eine Aussage über die Identität des Kodierungselements oder der Anordnung oder eine Aussage über den Wert eines von dem als Sensor ausgestalteten Kodierungselement detektierten Umgebungsparameters sein, welcher wiederum eine physikalische Größe oder Art und/oder Konzentration eines Stoffes sein kann. Die Anordnung ist so ausgestaltet, daß das nichtlineare Element erst bei Erreichen eines bestimmten Grenzwertes bezüglich der gespeicherten Sekundärenergie anspricht. Damit ist eine Verzögerung des Antwortsignals gegenüber der ursprünglichen Strahlung, welche ein Abfragesignal sein kann, gewährleistet.

Als Primärenergie für ein Abfragesignal dient eine elektromagnetische Strahlung beliebiger Wellenänge, für die in der Anordnung ein entsprechender Empfänger vorgesehen ist. Möglich sind insbesondere Hochfrequenzstrahlung im Funk- oder Mikrowellenbereich sowie Licht und insbesondere Laser. In einem geeigneten Empfänger kann die elektromagnetische Strahlung auch beliebig breitbandig sein und trotzdem vollständig genutzt werden. Ein hoher Wirkungsgrad bei der Nutzung der Strahlung ist damit gewährleistet.

Als Empfänger kann insbesondere eine Antenne, eine photoelektrische oder einje photovoltaische Zelle dienen.

Eine bevorzugte Sekundärenergie ist Wärmeenergie. Diese hat den Vorteil, daß sich dafür im Prinzip alle eine Masse aufweisende Medien als Zwischenspeicher eignen. Es sind aber auch andere Energieformen, z.B. mechanische Druckenergie oder elektrische Ladung, denkbar.

Als Wandler zur Überführung der Strahlungsenergie in Wärmeenergie kann ein Hochfrequenz-Heizer oder ein beliebiges anderes Heizelement dienen, je nachdem ob im Empfänger intermediär elektrische Energie erzeugt wird, wie z.B. bei einer photovoltaischen Zelle.

Wird im Empfänger elektrische Energie erzeugt, so kann diese direkt in Form von Ladung in einem Kondensator gespeichert werden. Möglich ist es auch, mit der elektrischen Energie einen Akkumulator oder ein anderes elektrochemisches Speicherelement aufzuladen.

Bei einer nicht elektrischen Sekundärenergie und insbesondere bei Wärmeenergie ist mit dem Zwischenspeicher ein weiterer Wandler verbunden, der die gespeicherte Sekundärenergieform in elektrische Energie umsetzt. Dieser weitere Wandler kann ein Thermoelement oder ein pyroelektrisches Element sein, das aus der Zwischenenergie eine elektrische Ladung erzeugt. Bei Druck als Sekundärenergieform ist ein Piezo-Element als weiterer Wandler gut geeignet.

Gekoppelt an diesen Zwischenspeicher oder den weiteren Wandler befindet sich ein nichtlineares Element, das die gespeicherte Sekundärenergie in ein pulsförmiges Hochfrequenzsignal überführt. Überschreitet die gespeicherte Sekundärenergie ein bestimmtes Niveau, so wird sie mit Hilfe des nichtlinearen Elementes in sehr kurzer Zeit entladen und auf diese Weise ein kurzer elektrischer Impuls erzeugt, der verglichen mit dem empfangenen Primär-Signal (Strahlung) eine sehr hohe Amplitude besitzt.

Als nichtlineares Element sind insbesondere geeignet: eine Funkenstrecke, eine Diode, eine Gasentladungsröhre oder ein Avalanche-Halbleiterelement.

In dem Kodierungselement wird dem pulsförmigen Hochfrequenzsignal die bereits erwähnte Information aufgeprägt und ein Antwortsignal erzeugt. Möglich ist es dabei, sowohl identitätsbezogene als auch sensorische Information aufzuprägen. Damit kann das vom Zeitpunkt eher zufällig gesendete Antwortsignal einem bestimmten Kodierungselement zugeordnet werden.

Eine bevorzugte Ausführung für das Kodierungselement ist ein OFW-Bauelement. Dieses läßt sich sowohl als ID-Marke oder ID-TAG, als auch wegen seiner Empfindlichkeit gegenüber einer einwirkenden Kraft oder Temperatur als Sensor einsetzen.

Auch sind für das Kodierungselement eine Resonatoranordnung, eine Verzögerungsleitung, ein dielektrisches Filter, ein Koaxial-Keramikfilter, ein Volumenschwinger oder ein LC-Filter geeignet.

Die Anordnung ist geeignet, aus einer über längere Zeit einwirkenden Strahlung, die auch ein, im folgenden Pumpsignal genanntes, aktives Signal sein kann, mit vergleichsweise geringer Amplitude ein zeitlich sehr kurzes pulsförmiges Signal mit vergleichsweise hoher Amplitude zu erzeugen. Als Pumpsignal kann nicht nur ein Mikrowellen-Signal, sondern auch ein anderes Strahlungssignal, wie z.B. ein von einem Laser ausgesandes Lichtsignal, verwendet werden.

Im folgenden werden Ausführungsbeispiele der Erfindung anhand der Zeichnung erläutert.

Jede der beiden Figuren zeigt ein Ausführungsbeispiel in schematischer Darstellung.

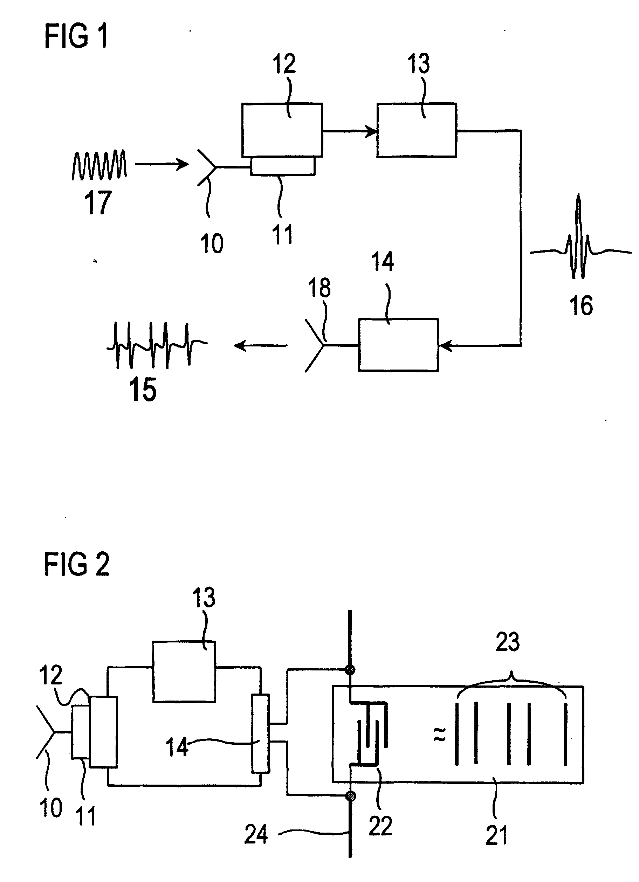

Figur 1 zeigt ein erstes Ausführungsbeispiel. Ein HF-Abfragesignal stellt die Strahlung 17 dar, die von einer Antenne als Empfänger 10 in der Anordnung empfangen wird. Mit Hilfe eines geeigneten Wandlers 11, z. B. einem Widerstandsheizelement, wird die empfangene Strahlung 17 in die Sekundärenergie, hier in Wärmeenergie, überführt. Als Speicher für die Wärmeenergie dient die Masse eines pyroelektrischen Wandlers 12, der dabei gleichzeitig eine Pyrospannung erzeugt, die an dem nicht-linearen Element 13, hier einer Funkenstrecke, anliegt. Beim Erreichen einer von der Wärmemenge bzw. der Temperatur im pyroelektrischen Wandler 12 abhängigen Pyrospannung als Schwellenwert kommt es in der Funkenstrecke 13 zum elektrischen Überschlag, wobei ein hochfrequenter Puls 16 erzeugt wird.

Dieser Puls 16 wird dem Kodierungselement 14 zugeleitet, welches den Puls 16 mit einer identitätsbezogenen und/oder einer sensorischen Information versieht. Dafür kommen eine Vielzahl von Elementen in Betracht. So kann es sich beispielsweise um ein OFW-Element in Form einer Resonatoranordnung, um eine Verzögerungsleitung, ein dielektrisches Filter, ein mechanisches Filter, ein Koaxial-Keramikfilter, einen Volumenschwinger oder um ein LC-Filter handeln.

Die Anordnung wird hier zur Erzeugung von kurzen Antwortsignalen in einem berührungslos arbeitenden Identifizierungsoder Sensorsystem eingesetzt. Es ist dabei möglich, eine Antwort des Kodierungselements 14 gezielt anzufordern, indem ein Pumpsignal solange gesendet wird, bis das Antwortsignal erzeugt wird. Da die zeitliche Dauer des Ladevorgangs bis zur Aktivierung des nichtlinearen Elementes 13 von der Beschaffenheit der Übertragungsstrecke und den physikalischen Bedingungen des Speichers 12 und des Wandlers 11 etc. abhängt, wird das Antwortsignal zu einem nicht exakt vorhersagbaren, quasi zufälligen Zeitpunkt generiert. Sind die physikalischen Grenzbedingungen bekannt (z.B. maximale Übertragungsdämpfung im definierten Erfassungsbereich, Energie- und Schaltungscharakteristik der Anordnung etc.), so kann eine Zeit angegeben werden, nach der die Anordnung bei gegebenem Pumpsignal spätestens senden muß, solange sie intakt ist. Eine gezielte Diagnose ist somit möglich. Durch den quasi-zufälligen Antwortzeitpunkt läßt sich, anders als bei den bekannten funkabfragbaren Transpondersystemen, mit der Anordnung eine Pulkfähigkeit realisieren und es ist möglich, eine Vielzahl verschiedener Anordnungen mit einem einzigen Abfragegerät abzufragen. Darüber hinaus kann das Pumpsignal von jedem informationstragendem Antwortsignal getrennt dimensioniert und jedes Antwortsignal auf seine jeweilige Funktion angepaßt werden.

Da in der beschriebenen Anordnung keine aktive elektronische Schaltung im herkömmlichen Sinn betrieben wird, ist das Funktionsprinzip auch schon bei relativ geringer Pumpsignalleistung realisierbar bzw. ist bei gleicher Pumpleistung wie bei einem üblichen Transpondersystem eine hohe Reichweite bei moderaten Antennenabmessungen zu erzielen.

Figur 2 zeigt als weiteres Ausführungsbeispiel eine Anordnung mit einem OFW-Element 21 als Kodierungselement 14. Mit der Antenne 10 als Empfänger wird das von einem geeigneten, nicht dargestellten Abfragegerät gesendete Hochfrequenzsignal (Strahlung) empfangen. Mit der empfangenen Energie wird ein pyroelektrischer Kristall eines pyroelektrischen Elementes 12 als Speicher 12 über eine Heizung 11 als Wandler 11 erwärmt. Durch die Erwärmung baut sich an dem pyroelektrischen Element 12 eine elektrische Spannung entsprechend der in dem Kristall gespeicherten Sekundärenergie auf, die, wenn sie einen Schwellenwert überschreitet, eine Funkenstrecke 13 zum Durchbruch bringt. Dabei entlädt sich die gespeicherte Sekundärenergie pulsartig und erzeugt ein pulsförmiges Hochfrequenzsignal. Dieses Hochfrequenzsignal wird über eine geeignete Anpaßschaltung (z.B. ein angepaßtes Filter oder ein Resonanzkreis) auf den Interdigitalwandler 22 des OFW-Elementes 21 gegeben und in ein akustisches Signal gewandelt. Dieses akustische Signal wird an den auf dem OFW-Element 21 befindlichen Strukturen 23 reflektiert und nach Rückwandlung in ein elektrisches Signal als Antwortsignal über die Antenne 24 abgestrahlt. Das so kodierte Antwortsignal kann dann von einer geeigneten, nicht dargestellten Empfangseinheit detektiert und ausgewertet werden. Das Impulsmuster enthält die Information über eine durch die Strukturen realisierte Kodierung und/oder erlaubt es, aus der Einwirkung eines Umgebungsparameters auf das OFW-Bauelement 21 in Form einer entsprechenden Veränderung der Information die Art oder den Wert des Umgebungsparameters zu bestimmen.

Der Kristall 12 ist thermisch derart von der Umgebung isoliert, daß die Erwärmung durch die empfangene Energie deutlich schneller abläuft als die Abfuhr der Wärme an die Umgebung. Dabei ist aber die Abfuhr der Wärme an die Umgebung so groß, daß sich der Kristall 12 in jeder Sendepause, in der keine Energie empfangen wird, soweit abkühlt, daß er sich bei einem definierten Abfrage / Pausenverhältnis auch bei wiederholter Abfrage nicht über einen kritischen Punkt (z.B. Curie-Temperatur) erwärmt.

Wenn eine gesonderte Anpassung der Antennen 10 und 24 an das Abfrage- bzw. Antwortsignal 17,18 nicht notwendig ist, können diese auch als eine gemeinsame einzelne Antenne ausgeführt sein.

Im folgenden wird eine Energiebilanz einer Ausführung gemäß Figur 2 aufgestellt. Als Material für den pyroelektrischen Wandler 12 wird Lithiumtantalat gewählt, welches sich durch einen sehr hohen pyroelektrischen Effekt auszeichnet. Eine Masse von 0,1 Gramm reicht aus, um die Energie für jeweils einen Sendevorgang (Durchbruch der Funkenstrecke 13) mit geringer Reichweite (einige Meter) bei einer Temperaturerhöhung von 0,5 K bereitzustellen.

Die spezifische Wärmekapazität von Lithiumtantalat beträgt etwa 0,4 Ws/g*K. Um eine Menge von 0,1g um 0,5K zu erwärmen, ist demzufolge die Energiemenge von 0,4Ws/g*K * 0,5K * 0,1g = 0,02Ws erforderlich.

Bei der Anregung durch ein Funksignal müssen nun die entstehenden Verluste berücksichtigt werden. Allgemein gilt für die Energiebilanz einer Funkübertragung:

$$Pe = (Ps*Ge*Gs*\lambda^2) / 4*\pi*r^2$$

wobei die Symbole für folgende Größen stehen:

| | |
|---|---|
| $Pe$ = | von der Empfangsantenne aufgenommene Leistung |
| $Ps$ = | Sendeleistung der hochfrequenten Anregeschwingung |
| $\lambda$ = | Wellenlänge der Schwingung |
| $Gs$ = | Antennengewinn der Sendeantenne |
| $Ge$ = | Antennengewinn der Empfangsantenne |
| $r$ = | Abstand zwischen den Antennen |

Wenn man legt folgende Werte für das Ausführungsbeispiel zugrunde;

| | |
|---|---|
| $PS$ = | 0,1 W |
| $\lambda$ = | 3 m (100 MHz) |
| $Gs$ = | 1 |
| $Ge$ = | 0,3 |
| $r$ = | 1 m |

ergibt sich eine Empfangsleistung von Pe = 0,02 W. Das bedeutet, daß sich nach einer Zeit von 1 s die Energiemenge von 0,02 Ws angesammelt hat, welche die für die Aussendung eines Antwortsignals erforderlich ist. Bei dieser Rechnung wurden die Wärmeverluste und weitere Verluste vernachlässigt, da diese bei der praktischen Realisierung nur eine untergeordnete Rolle spielen und deshalb das Ergebnis der Betrachtung nicht wesentlich verändern.

Sehr vorteilhaft läßt sich die Anordnung zur Abfrage des Inhaltes eines Warenkorbes einsetzen. Jede Ware in dem Warenkorb (Warenkorb z.B. ein Einkaufswagen, eine Palette, ein Container, ein Transportfahrzeug, ein Fließband o.ä.) ist mit einer beschriebenen Anordnung als Identifikationselement versehen. Der Warenkorb wird zur Abfrage mit dem Pumpsignal bestrahlt. Das Pumpsignal verursacht dann bei jeder Identifikationsmarke zu quasi zufälligen Zeitpunkten jeweils einen Durchbruch, der ein kodiertes Antwortsignal erzeugt. Die Dauer der Bestrahlung wird so lang gewählt, daß sichergestellt ist, daß jede Identifikationsmarke mindestens einmal gesendet hat. Diese gesendeten Antwortsignale werden dann von einem hier nicht näher ausgeführtem Abfragegerät empfangen. Durch Auswerten der gesendeten kodierten Signale wird dann auf den Inhalt des Warenkorbes geschlossen. Besitzt eine Identifikationsmarke zusätzlich eine Sensorfunktion, so kann auch der Zustand einer Ware (z.B. Temperatur) abgefragt werden

Ein weiteres Anwendungsgebiet ergibt sich bei Anwendung der Anordnung als Ersatz für diverse Autorisierungsmechanismen, beispielsweise zur Rechnerzugangskontrolle oder zur Lizensierung einer Softwarebenutzung. Sie kann daher als Ersatz für Paßwörter und Hardware-Keys/Dongles dienen. Jeder autorisierte Benutzer trägt hierbei eine die Anordnung enthaltende Identifikationsmarke bei sich. In geeigneten Zeitabständen sendet das Abfragesystem, das z.B. als Einsteckkarte in den Rechner (oder in der Frontseite des Monitors) eingebaut ist, ein Pumpsignal aus und stellt fest, ob eine Identifikationsmarke antwortet (also ob ein Benutzer oder mehrere Benutzer anwesend sind).

Zur Rechnerzugangskontrolle werden derzeit fast ausschließlich Verfahren eingesetzt, welche auf der Anwendung verschlüsselter Paßwörter beruhen. Diese Verfahren weisen mehrere Nachteile auf:

a) Benutzer wählen zu einfache Paßwörter,

b) Benutzer vergessen ihre Paßwörter,

c) Paßwörter können, falls sie nicht autorisierten Personen bekannt werden, von diesen benutzt werden, ohne daß der Verlust des Sicherungseffekte erkennbar ist.

Die genannten Nachteile können durch den Einsatz der Erfindung umgangen oder zumindest abgeschwächt werden. Der Benutzer wird allein durch seine Anwesenheit (zusammen mit der ihn charakterisierenden Identifikationsmarke) eindeutig identifiziert. Entfernt sich der Benutzer von dem Rechner, sind die verschiedensten Reaktionen denkbar: Vom einfachen Sperren des Arbeitsplatzes bis hin zum kompletten Abmelden aus dem System. Die Stärke dieses Verfahrens beruht auf seiner Zwangsläufigkeit; der Benutzer kann nicht mehr vergessen, seine Arbeitsstation zu sperren, wodurch der ungewollte Informationsabfluß verhindert wird. Eine Kopie der Identifikationsmarke ist, anders als bei einem Paßwort, nur mit einem erheblichen technischen Aufwand möglich. Die bisher bei der Softwarelizensierung üblichen Hardware-Keys haben den Nachteil, daß sie komfortabel nur bei einer maschinenabhängigen Lizenz einsetzbar sind. Die Erfindung ermöglicht es, daß ein Benutzer an verschiedenen (z.B. vernetzten) Rechnern arbeiten kann und die Software jeweils an dem Rechner freigeschaltet wird, an dem er sich gerade befindet. Die Benutzungsdauer kann für jede Lizenznummer protokolliert und es kann eine von der Nutzungsdauer abhängige Lizenzgebühr erhoben werden.

Literatur:

[1] Europäisches Patent EP 0619906 B1

[2] Europäisches Patent EP 0746775 B1

[3] Deutsches Patent DE 4413211 C2

[4] Europäische Patentanmeldung EP 0 773 451 A1

[5] B. Breuer, R. Isermann, Kolloquium Berührungslose Meßdaten- und Leistungsübertragung, Fortschrittberichte VDI Reihe 8 Nr. 515, VDI-Verlag, 1995

[6] Internationale Patentanmeldung WO98/36395 A2

**Patentansprüche**

1.  Anordnung zum Erzeugen eines eine Information tragenden Antwortsignals auf eine empfangene elektromagnetische Strahlung, umfassend:

    a) einen Empfänger (10) für die elektromagnetische Strahlung (17);
    b) einen mit dem Empfänger gekoppelten Wandler (11) zur Überführung der Strahlung in eine speicherbare Sekundärenergie;
    c) einen Speicher (12) für die speicherbare Sekundärenergie;
    d) ein nichtlineares Element (13) zum Erzeugen eines pulsförmigen Hochfrequenzsignals (16) aus der speicherbaren Sekundärenergie bei Erreichen eines Schwellenwertes in dem Speicher;
    e) ein Kodierungselement (14), mit dem dem Hochfrequenzsignal die Information aufgeprägt und das Antwortsignal erzeugt werden kann; und
    f) eine Sendeantenne (18) zum Aussenden des Antwortsignals.

2.  Anordnung nach Anspruch 1, bei der der Wandler (11) ein Heizelement und der Speicher (12) ein Wärmespeicher und insbesondere ein pyroelektrisches Element ist.

3.  Anordnung nach einem der vorigen Ansprüche, bei der der Empfänger (10) ein Funkempfänger ist.

4.  Anordnung nach einem der vorigen Ansprüche, bei der ein photoelektrisches oder ein photovoltaisches Element (10, 11) vorgesehen ist, das die Funktion des Empfängers (10) und des Wandlers (11) erfüllt.

5.  Anordnung nach Anspruch 4, bei der das photoelektrische oder ein photovoltaische Element als Empfänger (10) und Wandler (11) vorgesehen ist und bei der Speicher (12) zur Speicherung von elektrischer Energie ausgebildet ist.

6.  Anordnung nach einem der Ansprüche 1 und 3 bis 5, bei der der Speicher (12) ein Kondensator oder ein elektrochemisches Speicherelement ist.

7.  Anordnung nach einem der Ansprüche 1, 2 und 6, bei dem der Empfänger (10) ein IR-Empfänger ist.

8.  Anordnung nach einem der Ansprüche 1 bis 7, bei der das nichtlineare Element (13) ausgewählt ist aus der Gruppe umfassend Funkenstrecke, Diode, Gasentladungsröhre und Avalanche-Halbleiterelement.

9.  Anordnung nach einem der Ansprüche 1 bis 8, bei der das Kodierungselement (14) ein OFW-Bauelement ist.

10. Anordnung nach einem der Ansprüche 1 bis 8, bei der das Kodierungselement (14) ausgewählt ist aus einer Resonatoranordnung, einer Verzögerungsleitung, einem dielektrischen Filter, einem Koaxial-Keramikfilter, einem Volumenschwinger oder einem LC-Filter.

11. Anordnung nach einem der vorigen Ansprüche, bei dem das Kodierungselement (14) ein Sensor (14) ist.

12. Verfahren zur Fernabfrage einer Anordnung zum Erzeugen eines eine Information tragenden Antwortsignals auf eine empfangene elektromagnetische Strahlung, bei dem in Folge:

    in einer Abfragevorrichtung eine elektromagnetische Strahlung (17) relativ niedriger Amplitude erzeugt wird;
    die Strahlung (17) zu der Anordnung übertragen wird;
    Sekundärenergie der Strahlung (17) in der Anordnung gespeichert wird;
    aus der gespeicherten Sekundärenergie bei Erreichen eines Schwellwertes ein kurzes pulsförmiges Hochfrequenzsignal (16) von relativ hoher Amplitude erzeugt wird;
    dem kurzen Hochfrequenzsignal (16) eine Information aufgeprägt und ein Antwortsignal erzeugt wird; und
    das Antwortsignal abgestrahlt wird.

13. Verfahren nach Anspruch 12, bei dem die Sekundärenenergie als Wärme in einem pyroelektrischen Element (12) gespeichert wird; das pyroelektrische Element eine temperaturabhängige Pyrospannung erzeugt; und ein nichtlineares Element (13) bei Erreichen einer vorgegebenen Pyrospannung als Schwellwert das Hochfrequenzsignal (16) erzeugt.

14. Verfahren nach Anspruch 12 oder Anspruch 13, bei dem dem Hochfrequenzsignal (16) ein Identifizierungscode als die Information aufgeprägt wird.

**15.** Verfahren nach Anspruch 12 oder Anspruch 13, bei dem dem Hochfrequenzsignal (16) mit einem Sensor (14), der auf einen Umgebungsparameter spezifisch reagiert, die Information als Aussage über die Art und/oder Größe des Umgebungsparameters aufgeprägt wird.

**Claims**

**1.** Arrangement for generating an information-bearing response signal to received electromagnetic radiation, comprising:

a) a receiver (10) for the electromagnetic radiation (17);
b) a transducer (11), coupled to the receiver, for changing the radiation to storable secondary energy;
c) a store (12) for the storable secondary energy;
d) a nonlinear element (13) for generating a pulse radio-frequency signal (16) from the storable secondary energy when a threshold value is reached in the store;
e) a coding element (14) by means of which the information can be applied to the radio-frequency signal and the response signal can be generated; and
f) a transmitting antenna (18) for transmitting the response signal.

**2.** Arrangement according to Claim 1, in which the transducer (11) is a heating element and the store (12) is a heat store and, in particular, a pyroelectrical element.

**3.** Arrangement according to one of the preceding claims, in which the receiver (10) is a radio receiver.

**4.** Arrangement according to one of the preceding claims, in which a photoelectric or photovoltaic element (10, 11) is provided which fulfils the function of the receiver (10) and of the transducer (11).

**5.** Arrangement according to Claim 4, in which the photoelectric or photovoltaic element is provided as a receiver (10) and transducer (11) and in which the store (12) is constructed for storing electrical energy.

**6.** Arrangement according to one of Claims 1 and 3 to 5, in which the store (12) is a capacitor or an electrochemical storage element.

**7.** Arrangement according to one of Claims 1, 2 and 6, in which the receiver (10) is an IR receiver.

**8.** Arrangement according to one of Claims 1 to 7, in which the nonlinear element (13) is selected from the group comprising a spark gap, diode, gas discharge tube and avalanche semiconductor element.

**9.** Arrangement according to one of Claims 1 to 8, in which the coding element (14) is a SAW component.

**10.** Arrangement according to one of Claims 1 to 8, in which the coding element (14) is selected from a resonator arrangement, a delay line, a dielectric filter, a coaxial ceramic filter, a volume oscillator or an LC filter.

**11.** Arrangement according to one of the preceding claims, in which the coding element (14) is a sensor (14).

**12.** Method for remotely interrogating an arrangement for generating an information-bearing response signal to received electromagnetic radiation, in which, in sequence:

electromagnetic radiation (17) of relatively low amplitude is generated in an interrogating device;
the radiation (17) is transmitted to the arrangement;
secondary energy of the radiation (17) is stored in the arrangement;
a short pulsed radio-frequency signal (16) of relatively high amplitude is generated from the stored secondary energy when a threshold value is reached;
information is applied to the short radio-frequency signal (16) and a response signal is generated;
and the response signal is radiated.

**13.** Method according to Claim 12, in which
the secondary energy is stored as heat in a pyroelectrical element (12);
the pyroelectrical element generates a temperature-dependent pyroelectrical voltage; and
a nonlinear element (13) generates the radiofrequency signal (16) when a predetermined pyroelectrical voltage is reached as threshold value.

**14.** Method according to Claim 12 or Claim 13, in which an identification code is impressed on the radio-frequency signal (16) as the information.

**15.** Method according to Claim 12 or Claim 13, in which the information is applied as information on the type and/or quantity of an environmental parameter to the radio-frequency signal (16) by a sensor (14) which reacts in a specific manner to the environmental parameter.

## Revendications

**1.** Dispositif de production d'un signal de réponse, portant une information, à un rayonnement électromagnétique reçu, comprenant :

a) un récepteur (10) du rayonnement (17) électromagnétique ;

b) un convertisseur (11) couplé au récepteur et destiné à transformer le rayonnement en une énergie secondaire emmagasinable ;

c) un accumulateur (12) de l'énergie secondaire emmagasinable ;

d) un élément (13) non linéaire de production d'un signal (16) en haute fréquence pulsé à partir de l'énergie secondaire qui peut être emmagasinée lorsqu'une valeur de seuil est atteinte dans l'accumulateur ;

e) un élément (14) de codage, par lequel l'information peut être imprimée au signal haute fréquence et le signal de réponse être obtenu ;

f) une antenne (18) d'émission du signal de réponse.

**2.** Dispositif suivant la revendication 1, dans lequel le convertisseur (11) est un élément de chauffage, et l'accumulateur (12) est un accumulateur de la chaleur et notamment un élément pyroélectrique.

**3.** Dispositif suivant l'une des revendications précédentes, dans lequel le récepteur (10) est un récepteur radio.

**4.** Dispositif suivant l'une des revendications précédentes, dans lequel il est prévu un élément (10, 11) photoélectrique ou photovoltaïque qui remplit la fonction du récepteur (10) et du convertisseur (11).

**5.** Dispositif suivant la revendication 4, dans lequel l'élément photoélectrique ou un élément photovoltaïque est prévu comme récepteur (10) et comme convertisseur (11), et dans lequel l'accumulateur (12) est constitué de manière à emmagasiner de l'énergie électrique.

**6.** Dispositif suivant l'une des revendications 1 et 3 à 5, dans lequel l'accumulateur (12) est un condensateur ou un élément électrochimique d'accumulation.

**7.** Dispositif suivant l'une des revendications 1,2 et 6, dans lequel le récepteur (10) est un récepteur IR.

**8.** Dispositif suivant l'une des revendications 1 à 7, dans lequel l'élément (13) non linéaire est choisi dans le groupe comprenant des éclateurs, des diodes, des tubes à décharge dans un gaz et des éléments semi-conducteurs à avalanche.

**9.** Dispositif suivant l'une des revendications 1 à 8, dans lequel l'élément (14) de codage est un composant à onde de surface.

**10.** Dispositif suivant l'une des revendications 1 à 8, dans lequel l'élément (14) de codage est choisi parmi un dispositif à résonateur, une ligne à retard, un fil diélectrique, un filtre en céramique coaxial, un oscillateur en volume ou un filtre LC.

**11.** Dispositif suivant l'une des revendications précédentes, dans lequel l'élément (14) de codage est un capteur (14).

**12.** Procédé d'interrogation à distance d'un dispositif de production d'un signal de réponse, portant une information, à un rayonnement électromagnétique reçu, dans lequel successivement :

on produit dans un dispositif d'interrogation un rayonnement (17) électromagnétique d'amplitude relativement petite ;

on transmet le rayonnement (17) au dispositif ;

on emmagasine de l'énergie secondaire du rayonnement (17) dans le dispositif ;

à partir de l'énergie secondaire emmagasinée, on produit, lorsqu'est atteint une valeur de seuil, un signal (16) haute fréquence court, à impulsion, d'une amplitude relativement grande ;

on imprime une information sur le signal (16) court à haute fréquence et on produit un signal de réponse ; et

on émet le signal de réponse.

**13.** Procédé suivant la revendication 12, dans lequel on emmagasine l'énergie secondaire sous forme de chaleur dans un élément (12) pyro-électrique ; l'élément pyro-électrique produit une pyrotension qui dépend de la température ; un élément (13) non linéaire produit, lorsqu'une pyrotension prescrite est atteinte en tant que valeur de seuil, le signal (16) haute fréquence.

**14.** Procédé suivant la revendication 12 ou la revendication 13, dans lequel on imprime un code d'identification en tant qu'information au signal (16) haute fréquence.

**15.** Procédé suivant la revendication 12 ou la revendication 13, dans lequel on imprime au signal (16) haute fréquence par un capteur (14) qui réagit spécifiquement à un paramètre ambiant l'information sous la forme d'une prédiction sur la nature et/ou la dimension du paramètre ambiant.

FIG 1

FIG 2